Europäisches Patentamt

European Patent Office

Office européen des brevets

(19)

(11) Veröffentlichungsnummer: **0 118 760**
**B1**

(12) # EUROPÄISCHE PATENTSCHRIFT

(45) Veröffentlichungstag der Patentschrift: **25.04.90**

(51) Int. Cl.⁵: **B 01 D 61/36**

(21) Anmeldenummer: **84101282.6**

(22) Anmeldetag: **08.02.84**

(54) **Einrichtung zur Trennung von Lösungen durch Pervaporation.**

(30) Priorität: **12.02.83 DE 3304956**

(43) Veröffentlichungstag der Anmeldung:
**19.09.84 Patentblatt 84/38**

(45) Bekanntmachung des Hinweises auf die
Patenterteilung:
**25.04.90 Patentblatt 90/17**

(84) Benannte Vertragsstaaten:
**AT DE FR GB NL**

(56) Entgegenhaltungen:
**DE-A-1 619 885**
**DE-A-1 964 635**
**US-A-3 608 610**
**US-A-3 695 444**

(73) Patentinhaber: **GKSS-Forschungszentrum**
**Geesthacht GmbH**
**Max-Planck-Strasse**
**D-2054 Geesthacht (DE)**

(72) Erfinder: **Hilgendorff, Walter**
**Lüneburger Strasse 96**
**D-2121 Tespe (DE)**
Erfinder: **Wenzlaff, Axel**
**Bundesstrasse 91**
**D-2050 Escheburg (DE)**
Erfinder: **Böddeker, Karl, Dr.**
**Dorfstrasse 32a**
**D-2413 Breitenfelde (DE)**
Erfinder: **Kahn, Gerhard**
**Tulpenweg 20**
**D-2054 Geesthacht (DE)**
Erfinder: **Lührs, Gunter**
**Dorfstrasse 4**
**D-2123 Bardowick (DE)**

(74) Vertreter: **Schöning, Hans-Werner, Dipl.-Ing.**
**et al**
**Patentanwälte Niedmers & Schöning**
**Jessenstrasse 4**
**D-2000 Hamburg 50 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft eine Membranstapeleinheit zur Trennung von Lösungen durch Pervaporation mit Rohmediumkammern für die Lösung, dampfdurchlässigen Membranen, Permeatkammern und zwischen jeweils zwei Rohmediumkammern angeordneter Heizung.

Eine Membranstapeleinheit dieser Art ist bekannt (US—A—3 605 445). Dort wird das gesamte Permeat einer Permeatkammer an stirnseitigen Öffnungen einseitig abgeführt, was zur Folge hat, daß die an verschiedenen Stellen einer Permeatkammer anfallenden unterschiedlich zusammengesetzten Permeate sich vermischen. Darüber hinaus ist bei der bekannten Membranstapeleinheit die Richtung des Flüssiggemisches so gewählt, daß es in der gleichen Richtung oberhalb der Membran geführt wird, so daß der sich aufkonzentrierende Strom des Flüssiggemisches einem Permeat gegenübersteht, das bereits an einer früheren Stelle gebildet wurde und demzufolge einen niedrigeren Gehalt an Fremdstoffen (Alkohol) aufweist, bzw. einen bereits höheren Wassergehalt, als es der Gleichgewichtseinstellung der Membran zu dem oben befindlichen Flüssigkeitsgemisch entspricht.

Nachteilig ist bei der bekannten Membranstapeleinheit, daß das durch sie gebildete System derart darauf reagiert, daß es an der vorbeschriebenen Stelle korrigierend die Gleichgewichtsverhältnisse wieder einstellt, was aber bedeutet, daß nunmehr eine geringere Wassermenge ins Permeat gelangt als eigentlich für den oben befindlichen Zulauf normal wäre, so daß der Verunreinigungsanteil durch die Membran (wieder) erhöht wird und damit der Wirkungsgrad der Membranstapeleinheit vermindert wird. Ein weiterer Nachteil der bakannten Membranstapeleinheit besteht darin, daß die Zulaufströme des Gemisches durch die dortige mäanderförmige Führung zusätzlich verzögert werden. So vollführt die zu trennende Lösung in der dortigen Rohmediumkammer fünf scharfe Umlenkungen um 180°.

Es ist Aufgabe der vorliegenden Erfindung, eine Membranstapeleinheit zu schaffen, die eine vollständige Nutzung der mit einer Membran grundsätzlich möglichen Trennleistung erlaubt, ohne daß es im unmittelbaren Membranbereich zu einer Vermischung der Permeate kommt.

Gelöst wird die Aufgabe gemäß der Erfindung dadurch, daß die maximale Länge des Permeatweges in der Permeatkammer einer halben Seite der Membran entspricht.

Der Vorteil der Membranstapeleinheit besteht im wesentlichen darin, daß es, wie angestrebt, in einer nachfolgenden Sammelleitung außerhalb des Membranbereiches erst zu einer Vermischung der Permeate kommt, da das Permeat in einem annähernd rechten Winkel gegen die Zulaufrichtung mit optimal möglicher Geschwindigkeit ausgetragen wird. Ein mit dem Zulauf im stationären Gleichgewicht befindliches Permeat wird ausschließlich unterhalb der gleichen Zulaufzusammensetzung bis zur Sammelleitung geführt.

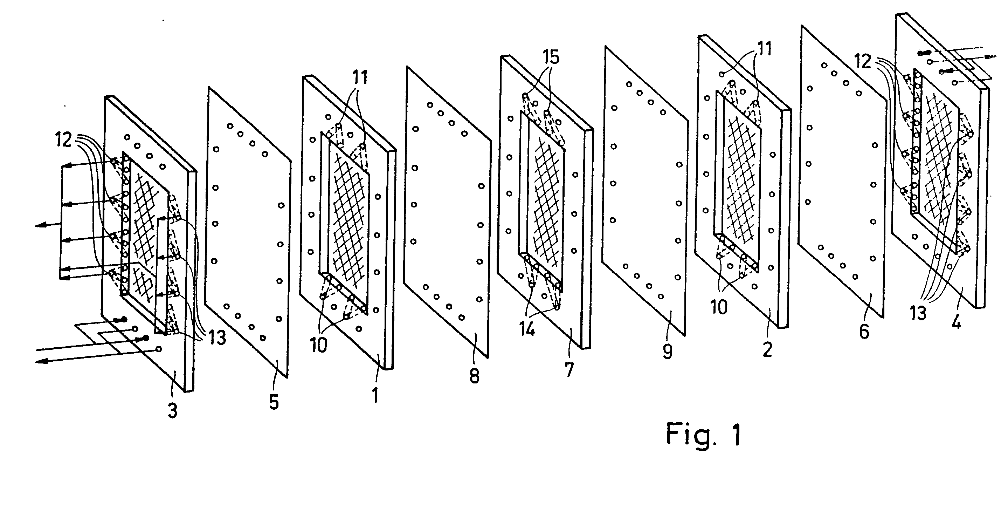

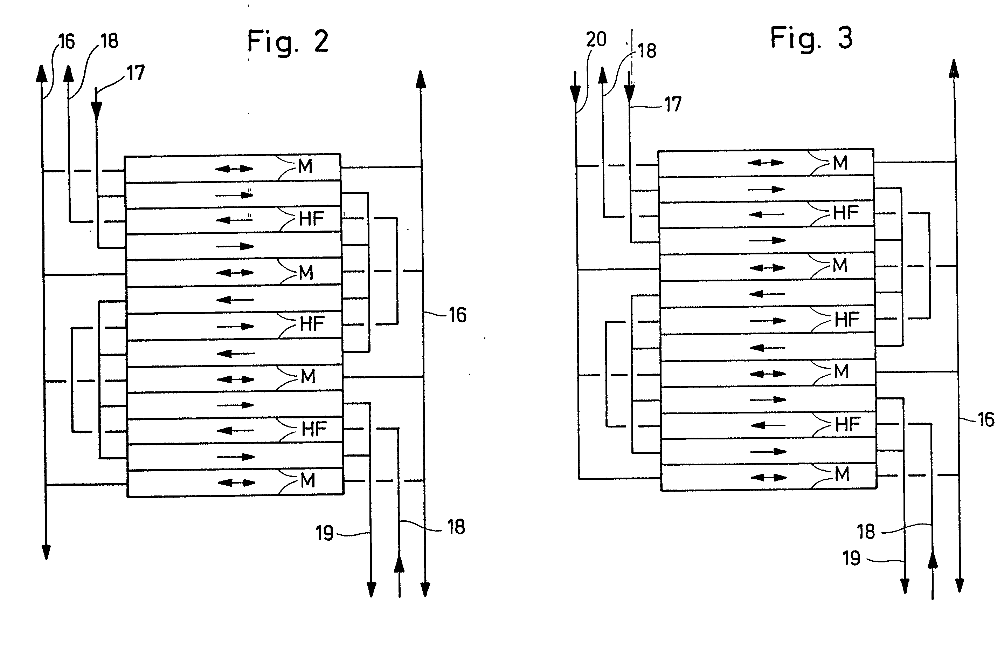

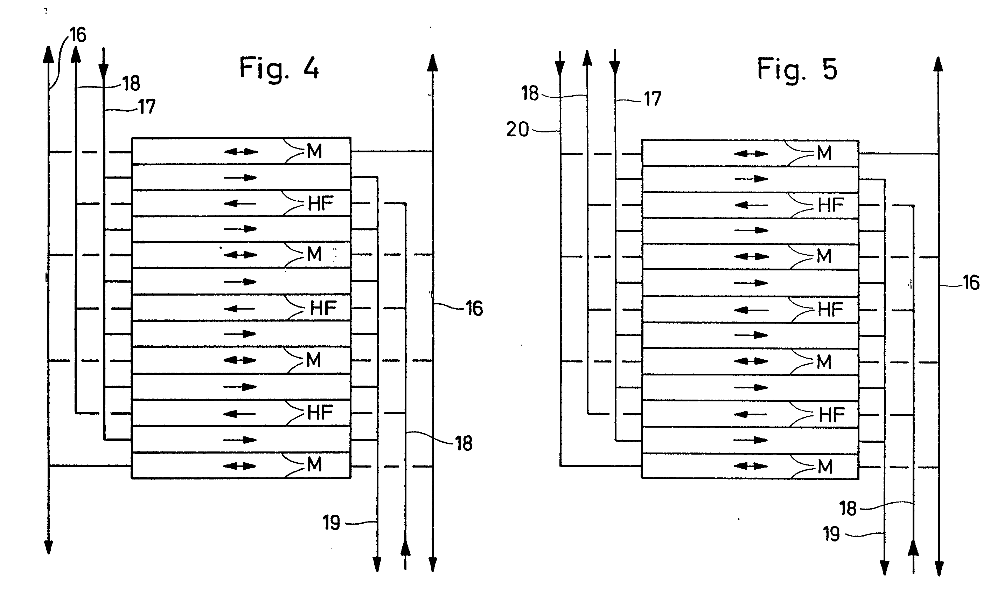

Die Erfindung wird im folgenden anhand von Ausführungsbeispielen mittels der Fig. 1—5 näher beschrieben.

Die Fig. 1 zeigt einen Teil eines Pervaporators, der ohne Spülgas, d.h. mit Unterdruck auf der Permeatkammerseite betrieben wird. Der dargestellte Teil des Pervaporators besteht aus einer Stapeleinheit aus Rohmediumkammern 1 und 2, Permeatkammern 3 und 4, Membranen 5 und 6 zwischen diesen Kammern 1—4 sowie einer Heizungskammer 7 mit beidseitig angebrachten Heizblechen 8 und 9. Alle Teile weisen die gleiche äußere Geometrie auf, vorzugsweise rechteckig, oder aber auch rund, oval, quadratisch oder vieleckig.

Die Permeat-, Rohmedium- und Heizungskammern 1—4 besitzen einen Rahmen, durch den verschiedene Bohrungen, die der Versorgung der einzelnen Kammern mit Rohmedium, Heizmedium oder Spülgas bzw. zur Anlegung eines Unterdrucks über entsprechende Verbindungen 10—15 dienen. Die Membranen 5 und 6 liegen hierbei zwischen jeweils einer Rohmedium- und einer Permeatkammer 1, 3 bzw. 2, 4. Das Rohmedium (Lösungen) fließt im vorliegenden Fall nahezu laminar von unten nach oben durch die Rohmediumkammern 1 und 2, wobei eine lineare Abkühlung vom Eintritt zum Austritt hin durch die Permeation erfolgt.

Diese Abkühlung wird dadurch verhindert, daß eine Heizung vorgesehen wird, die diese lineare Abkühlung aufhebt. Hierzu ist die Rohmediumkammer 1 (und aus wirtschaftlichen sowie konstruktiven Gründen spiegelbildlich die zweite Rohmediumkammer 2) über ihre gesamte Fläche mit der Heizungskammer 7 in Kontakt, durch die ein Heizmedium (Wasser) im umgekehrten Sinne wie das Rohmedium durch die Rohmediumkammern 1, 2 hindurchströmt. Das Heizmedium gibt dabei über die beiden zwischengelegten Heizbleche 8, 9 Wärme an das Rohmedium unter Abkühlung ab, erreicht, jedoch eine konstante Temperaturverteilung des Rohmediums in den Rohmediumkammern 1 und 2.

Anstelle einer Heizungskammer 7 mit ihren Heizblechen 8 und 9 kann je nach Anforderung auch eine elektrisch beheizte Einzelheizplatte verwendet werden, die das Rohmedium aufheizt. Bei einem höheren Anfall von Permeat können die Permeatkammern 3 und 4 entsprechend (Dicke) größer dimensioniert werden, ohne die Funktionsweise des Pervaporators zu stören.

Die Fig. 2—5 zeigen Schaltbeispiele für das Permeat 16, das Rohmedium 17, das Heizmedium 18, das Spülgas 20 sowie das Konzentrat 19 von Pervaporationseinheiten, wobei die Fig. 2 und 3 eine Reihenschaltung ohne und mit Spülgas und die Fig. 4 und 5 eine Parallelschaltung ohne und mit Spülgas darstellen.

Die Strömungsrichtungen der einzelnen Medien sind zwischen den Membranen M und den Heizflächen HF eingezeichnet. Weitere Schaltbeispiele sind denkbar, je nach Einsatz als Laborgerät oder die industrielle Verwendung.

Die Erfindung betrifft demnach ein wirtschaftliches Apparatekonzept zur Pervaporation, das die Nachteile vorhandener oder vorgenannter Geräte vermeidet.

Im einzelnen ist die Erfindung u.a. dadurch gekennzeichnet, daß folgende Ziele erreicht werden:

—Zuführung der Verdampfungswärme durch modulintegrierten Wärmetausch.

—Ausreichend dimensionierte Permeatkammer mit kurzen Abströmwegen.

—Geräteinterne, dem Trennproblem angepaßte Möglichkeit zur serien-, parallel oder gemischten Verschaltung der Trennkammern.

—Gewährleistung vollständiger und gleichmäßiger Überströmung der Membranen bei geringen Druckdifferenzen.

—hohe Packungsdichte.

—Vakuumfreie Betriebsmöglichkeit durch kontrollierte Durchströmung der Permeatkammern mit inertem Spülgas zum Permeataustrag.

Der Aufbau des Pervaporators in Plattenbauweise ist im wesentlichen gekennzeichnet durch:

—den Wechsel der Kammerfunktion, d.h. in die Permeatkammer kann die Rohlösung eingebracht werden und umgekehrt, zum Abbau von Konzentrationsüberhöhungen an der Oberfläche der Membran;

—die vielseitige Anwendung des Pervaporators, beginnend mit dem Einsatz als Laborgerät bis zur industriellen Anwendung;

—die direkte Energiezufuhr im Pervaporator, da bei gleichbleibend hoher Temperatur die Membran die höchsten Permeatflüsse bei maximaler Selektivität hat;

—kurze Permeatwege und große Strömungsquerschnitte in der Permeatkammer, wodurch ein schneller Abtransport das Dampfes aus der Permeatkammer und somit eine geringe Konzentration auf der Rückseite der Membran erreicht wird und

—rückseitige Anströmung der Membran mit der Rohlösung und Entnahme des Dampfes in der Rohlösungskammer, wodurch ein Abbau einer zu hohen Konzentration auf der Vorder- und Rückseite der Membran erreicht wird.

**Patentanspruch**

Einrichtung zur Trennung von Lösungen durch Pervaporation mit Rohmediumkammern (1, 2) für die Lösung, dampfdurchlässigen Membranen (5, 6), Permeatkammern (3, 4) und zwischen jeweils zwei Rohmediumkammern (1, 2) angeordneter Heizung (7), dadurch gekennzeichnet, daß die maximale Länge des Permeatweges in der Permeatkammer (3, 4) einer halben Seite der Membran (5, 6) entspricht.

**Revendication**

Dispositif pour séparer des solutions par évaporation à travers une membrane ou pervaporation, comprenant des chambres à milieu brut (1, 2) pour la solution, des membranes (5, 6) perméables à la vapeur, des chambres à perméat (3, 4) et un chauffage (7) disposé chaque fois entre deux chambres à milieu brut (1, 2), caractérisé en ce que la longueur maximale du trajet du perméat dans la chambre à perméat (3, 4) correspond à un demi-côté de la membrane (5, 6).

**Claim**

Equipment for the separation of solutions by pervaporation with raw-medium chambers (1, 2) for the solution, vapour-permeable membranes (5, 6), permeant chambers (3, 4) and heating (7) arranged between every two raw-medium chambers (1, 2), characterised by the fact that the maximum length of the permeant path in the permeant chamber (3, 4) corresponds to half the side of the membrane (5, 6).

Fig. 1

EP 0 117 760 B1

Fig. 3

Fig. 2

Fig. 4

Fig. 5

EP 0 117 760 B1